# EUROPEAN PATENT APPLICATION

(11) **EP 4 535 381 A1**
(43) Date of publication of application: **09.04.2025**
(21) Application number: 24196435.2
(22) Date of filing: 26.08.2024
(51) Int. Cl.: H01G 4/232, H01G 4/30, H01G 4/12

(54) **CERAMIC MULTILAYER CAPACITOR**

(30) Priority: 05.10.2023 KR 20230132538
(71) Applicant: Samsung Electro-Mechanics Co., Ltd., Gyeonggi-do (KR)
(72) Inventor: Lee, Dong Hyeon, Suwon-si, Gyeonggi-do (KR); Ahn, Seung Min, Suwon-si, Gyeonggi-do (KR); Yun, Hyung Duk, Suwon-si, Gyeonggi-do (KR); Park, Chae Min, Suwon-si, Gyeonggi-do (KR); Kwag, Joon Hwan, Suwon-si, Gyeonggi-do (KR); Jeon, Byung Jun, Suwon-si, Gyeonggi-do (KR); Kim, Hong Seok, Suwon-si, Gyeonggi-do (KR)
(74) Representative: Grünecker Patent- und Rechtsanwälte PartG mbB

(57) **Abstract**

A multilayer electronic component may include: a body including a dielectric layer and internal electrodes alternately disposed with the dielectric layer; an interface plating layer disposed on an end of the internal electrode; and an external electrode disposed to contact at least a portion of an end of the dielectric layer disposed between the internal electrodes and to cover the interface plating layer, and including a conductive resin layer including a conductive metal and a resin.

## Description

### CROSS-REFERENCE TO RELATED APPLICATION(S)

This application claims benefit of priority to Korean Patent Application No. 10-2023-0132538 filed on October 5, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser mounted on the printed circuit boards of various electronic products, such as image display devices including a liquid crystal display (LCD) and a plasma display panel (PDP), computers, smartphones and mobile phones, serving to charge or discharge electricity therein or therefrom.

The multilayer ceramic capacitor may be used as a component in various electronic devices due to having a small size, ensuring high capacitance and being easily mounted.

Recently, as an electronic device is miniaturized and implemented with higher levels of performance, the multilayer ceramic capacitor is also trending toward miniaturization and higher capacitance, and according to this trend, the importance of securing high reliability of the multilayer ceramic capacitor is increasing.

As a manner of securing high reliability of the multilayer ceramic capacitor, in order to prevent cracks caused by stress by absorbing tensile stress generated in mechanical or thermal environments, a technology for applying a conductive resin layer to an external electrode has been disclosed.

This conductive resin layer is generally disposed between a sintered electrode layer and a plating layer. However, in this case, there is a risk that the capacitance per unit volume of the multilayer ceramic capacitor may decrease. On the other hand, when a conductive resin layer is disposed directly on the body, there is a risk that the electrical connectivity between the internal electrodes and external electrodes may be reduced.

Therefore, a method is required to improve capacitance per unit volume while securing electrical connectivity between the internal electrode and the external electrode.

### SUMMARY

An aspect of the present disclosure is to provide a multilayer electronic component having excellent reliability.

An aspect of the present disclosure is to improve electrical connectivity between an internal electrode and an external electrode.

some aspects of the present disclosure may be to improve capacitance per unit volume of a multilayer electronic component.

According to some aspects of the present disclosure, a multilayer electronic component may include: a body including a dielectric layer and internal electrodes alternately disposed with the dielectric layer; an interface plating layer disposed on an end of the internal electrode; and an external electrode disposed to contact at least a portion of an end of the dielectric layer disposed between the internal electrodes and to cover the interface plating layer, and including a conductive resin layer including a conductive metal and a resin.

As one of various effects of the present disclosure, an interfacial plating layer may be disposed on an end of an internal electrode, and a conductive resin layer may be disposed to contact at least a portion of an end of a dielectric layer disposed between the internal electrodes and to cover the interface plating layer, thereby improving reliability of a multilayer electronic component.

As one of various effects of the present disclosure, electrical connectivity between an internal electrode and an external electrode may be improved.

As one of various effects of the present disclosure, the capacitance per unit volume of a multilayer electronic component may be improved.

However, advantages and effects of the present disclosure are not limited to the above-described contents, and may be more easily understood in the process of describing specific embodiments of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to some example embodiments of the present disclosure;
FIG. 2 is a schematic cross-sectional view taken along line I-I' of FIG. 1;
FIG. 3 is a schematic cross-sectional view of II-II' of FIG. 1;
FIG. 4 is an exploded view schematically illustrating a body;
FIG. 5 schematically illustrates a portion of the body of FIG. 2; and
FIG. 6 is an enlarged view illustrating region K1 of FIG. 2.

### DETAILED DESCRIPTION

Hereinafter, some embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

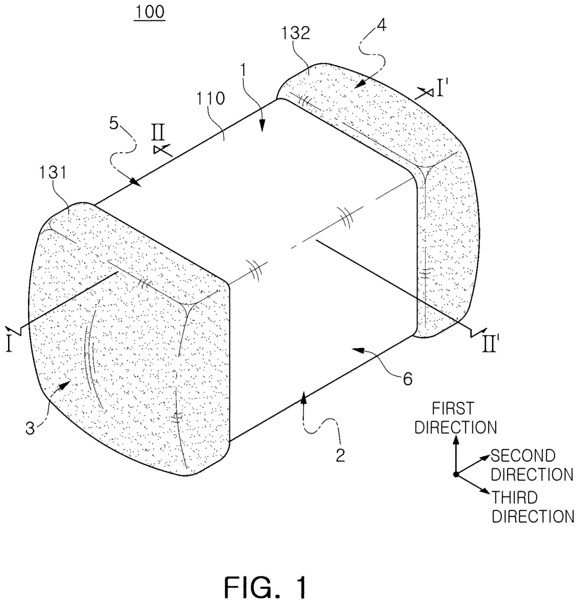

FIG. 1 is a perspective view schematically illustrating a multilayer electronic component according to an example embodiment of the present disclosure.

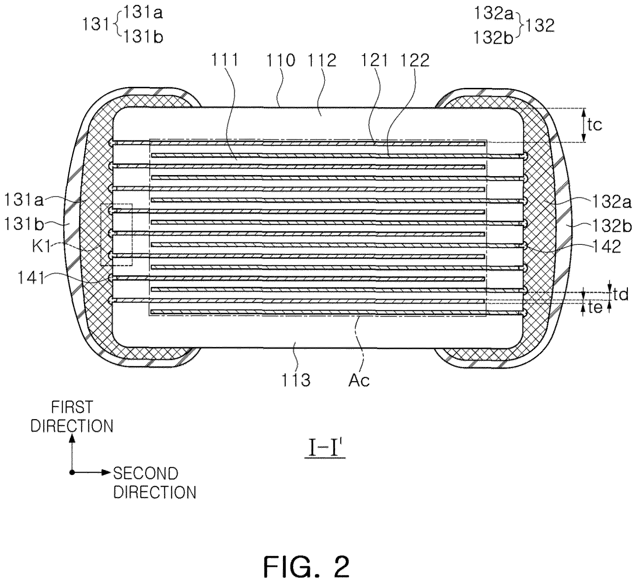

FIG. 2 is a schematic cross-sectional view taken along line I-I' of FIG. 1.

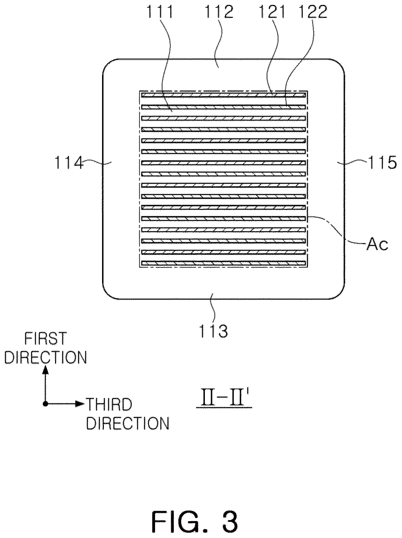

FIG. 3 is a schematic cross-sectional view of II-II' of FIG. 1.

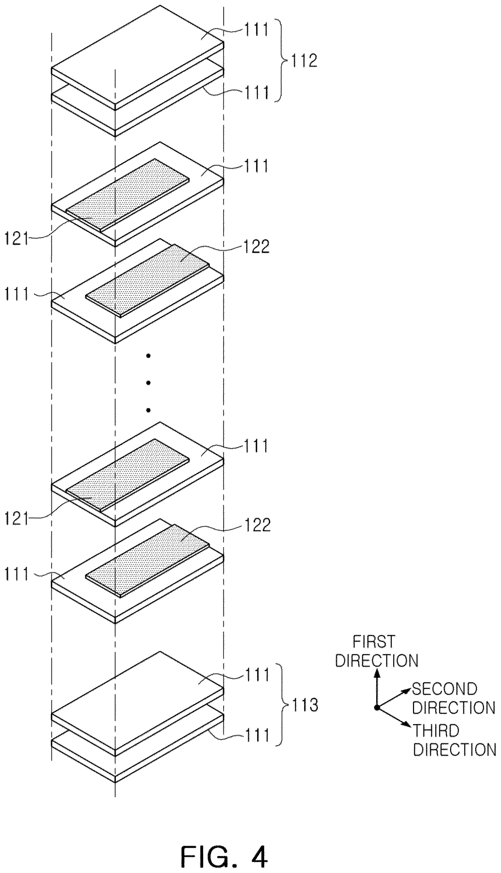

FIG. 4 is an exploded view schematically illustrating a body.

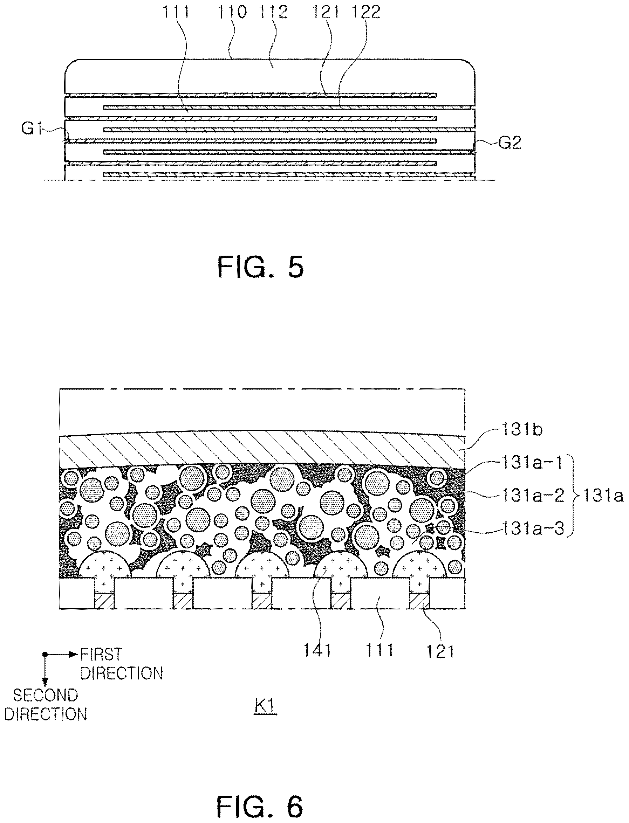

FIG. 5 schematically illustrates a portion of the body of FIG. 2.

FIG. 6 is an enlarged view illustrating region K1 of FIG. 2.

Hereinafter, a multilayer electronic component 100 according to an example embodiment of the present disclosure will be described in detail with reference to FIGS. 1 to 6. Additionally, as an example of a multilayer electronic component, a multilayer ceramic capacitor (hereinafter referred to as 'MLCC') will be described, but the present disclosure is not limited thereto, and the multilayer electronic component 100 may also be applied to various multilayer electronic components using ceramic materials, such as an inductor, a piezoelectric element, a varistor, or a thermistor.

The multilayer electronic component 100 according to some example embodiments of the present disclosure may include a body 110 including a dielectric layer 111 and internal electrodes 121 and 122 alternately disposed with the dielectric layer; interface plating layers 141 and 142 disposed in ends of the internal electrodes; and external electrodes 131 and 132 disposed to contact at least a portion of an end of the dielectric layer disposed between the internal electrodes and to cover the interface plating layer, and including conductive resin layers 131a and 132a including a conductive metal and a resin.

Conventionally, a conductive resin layer was generally disposed between a sintered electrode layer and a plating layer disposed on the body. However, in this case, as a thickness of the external electrode increases, there may be a risk that the capacitance per unit volume of the multilayer ceramic capacitor may decrease. On the other hand, when a conductive resin layer is disposed directly on the body, there may be a concern that the electrical connectivity between an internal electrode and an external electrode may be deteriorated.

According to an example embodiment of the present disclosure, an interfacial plating layer may be disposed on an end of the internal electrode electrical connectivity between the internal electrode and the external electrode may be improved, and the conductive resin layer may be disposed to contact at least a portion of the end of the dielectric layer disposed between the internal electrodes and to cover the interface plating layer, thereby improving reliability by securing adhesive force between the external electrode and the body.

Hereinafter, each configuration included in the multilayer electronic component 100 according to an example embodiment of the present disclosure will be described.

The body 110 may include dielectric layers 111 and internal electrodes 121 and 122 alternately stacked.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with a complete straight line, but may have a substantially hexahedral shape.

The body 110 may include first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first and second surfaces 1 and 2, connected to the third and fourth surfaces 3 and 4 and opposing each other in a third direction.

As margin regions in which the internal electrodes 121 and 122 are not disposed overlap on the dielectric layer 111, a step portion due to a thickness of the internal electrodes 121 and 122 may occur, so that a corner connecting the first surface and the third to fifth surfaces and/or a corner connecting the second surface and the third to fifth surfaces may have a shape contracted toward a center of the body 110 in the first direction when viewed from the first surface or the second surface. Alternatively, due to the contraction behavior during the sintering process of the body, a corner connecting the first surface 1 and the third to sixth surfaces 3, 4, 5 and 6 and/or a corner connecting the second surface 2 and the third to sixth surfaces 3, 4, 5 and 6 may have a shape contracted toward a center of the body 110 in the first direction when viewed from the first surface or the second surface. Alternatively, in order to prevent chipping defects, and the like, the corners connecting each surface of the body 110 may be rounded by performing a separate process, so that a corner connecting the first surface and the third to sixth surfaces and/or a corner connecting the second surface and the third to sixth surfaces may have a rounded shape.

Meanwhile, in order to suppress a step portion caused by the internal electrodes 121 and 122, the internal electrodes after stacking may be cut to be exposed to the fifth and sixth surfaces 5 and 6 of the body, and when forming margin portions 114 and 115 by stacking a single dielectric layer or two or more dielectric layers on both surfaces of a capacitance formation portion Ac in the third direction (width direction), a portion connecting the first surface to the fifth and sixth surfaces and a portion connecting the second surface to the fifth and sixth surfaces may not have a contracted shape.

In a state in which a plurality of dielectric layers 111 forming the body 110 are sintered, boundaries between adjacent dielectric layers 111 may be integrated to a degree as to be difficult to identify without using a scanning electron microscope (SEM). The number of stacked dielectric layers is not particularly limited and may be determined in consideration of the size of the multilayer electronic component. For example, the body may be formed by stacking 400 or more dielectric layers.

The dielectric layer 111 may be formed by producing a ceramic slurry including ceramic powder particles, an organic solvent and a binder, applying and drying the slurry on a carrier film to prepare a ceramic green sheet, and then sintering the ceramic green sheet. The ceramic powder particles are not particularly limited as long as sufficient electrostatic capacitance may be obtained, but for example, barium titanate-based (BaTiO₃)-based powder particles may be used as the ceramic powder particles. For more specific examples, ceramic powder particles may be at least one selected from the group consisting of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{x-y}Zr_{y})O₃ (0<x<1, 0<y<1), and Ba (Ti_{1-y}Zr_{y})O₃ (0<y<1).

An average thickness td of the dielectric layer 111 in the first direction is not particularly limited, but may be, for example, 0.01 um to 10 um. Additionally, the average thickness td of the dielectric layer 111 may be arbitrarily set depending on the desired characteristics or purpose, and for example, in the case of small IT electronic components, in order to achieve miniaturization and high capacitance, the average thickness td of at least one of the plurality of dielectric layers 111 may be 0.4 um or less.

Here, the average thickness td of the dielectric layer 111 may refer to a first directional size of the dielectric layer 111 disposed between the internal electrodes 121 and 122. The average thickness of the dielectric layer 111 may be measured by scanning first and second directional cross-sections of the body 110 with a scanning electron microscope (SEM) of 10,000X magnification. More specifically, an average value may be measured by measuring the thickness at multiple areas of one dielectric layer 111, for example, 30 areas in which are spaced apart from each other at equal intervals in the second direction. The 30 areas with the equal intervals may be designated in the capacitance formation portion Ac to be described below. Additionally, when the average value is measured by extending an average value measurement up to 10 dielectric layers 111, an average thickness of the dielectric layers 111 may be further generalized.

The body 110 may include a capacitance formation portion Ac disposed inside the body 110 and configured to form a capacitance by including a first internal electrode 121 and a second internal electrode 122 disposed to face each other with the dielectric layer 111 interposed therebetween, and cover portions 112 and 113 formed above and below the capacitance formation portion Ac in the first direction.

Additionally, the capacitance formation portion Ac is a portion that contributes to forming the capacitance of a capacitor, and may be formed by repeatedly stacking a plurality of first and second internal electrodes 121 and 122 with a dielectric layer 111 therebetween.

The cover portions 112 and 113 may include an upper cover portion 112 disposed above the capacitance formation portion Ac in the first direction, and a lower cover portion 113 disposed below the capacitance formation part Ac in the first direction.

The upper cover portion 112 and the lower cover portion 113 may be formed by stacking a single dielectric layer or two or more dielectric layers in a thickness direction on upper and lower surfaces of the capacitance formation portion Ac, respectively, and may basically serve to prevent damage to the internal electrode due to physical or chemical stress.

The upper cover portion 112 and the lower cover portion 113 do not include internal electrodes and may include the same material as the dielectric layer 111.

That is, the upper cover portion 112 and the lower cover portion 113 may include a ceramic material, for example, a barium titanate (BaTiO₃)-based ceramic material.

Meanwhile, a thickness of the cover portions 112 and 113 in the first direction does not need to be particularly limited. However, in order to more easily achieve miniaturization and high capacitance of the multilayer electronic component, an average thickness of the cover portions 112 and 113 in the first direction may be 15 um or less.

An average thickness tc of the cover portions 112 and 113 may refer to a first directional size, and is a value obtained by averaging first directional sizes of the cover portions 112 and 113 measured at five areas spaced apart from each other by an equal interval in an upper portion or a lower portion of the capacitance formation portion Ac.

Additionally, the margin portions 114 and 115 may be disposed on a side surface of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in a width direction.

As illustrated in FIG. 3, the margin portions 114 and 115 may refer to regions between both ends of the first and second internal electrodes 121 and 122 and a boundary surface of the body 110 in a cross-section obtained by cutting the body 110 in a width-thickness (W-T) direction.

The margin portions 114 and 115 may basically serve to prevent damage to the internal electrodes due to physical or chemical stress.

The margin portions 114 and 115 may be formed by forming internal electrodes by applying a conductive paste on a ceramic green sheet except for regions in which the margin portion is to be formed.

Additionally, in order to suppress a step portion caused by the internal electrodes 121 and 122, the internal electrode after stacking may be cut to be exposed to the fifth and sixth surfaces 5 and 6 of the body, and then, the margin portions 114 and 115 may be formed by stacking a single dielectric layer or two or more dielectric layers on both side surfaces of the capacitance formation portion Ac in the third direction (width direction).

Meanwhile, a width of the margin portions 114 and 115 in the third direction is not particularly limited. However, in order to more easily achieve miniaturization and high capacitance of the multilayer electronic component, an average width of the margin portions 114 and 115 in the third direction may be 15 um or less.

The average width of the margin portions 114 and 115 may refer to an average size of a region in which the internal electrode is spaced from the fifth surface, in the third direction, and an average size of a region in which the internal electrode is spaced from the sixth surface, in the third direction, and may be an average value obtained by averaging third directional sizes of the margin portions 114 and 115 measured at five areas spaced apart from each other by an equal interval on the side surface of the capacitance formation portion Ac.

Accordingly, in some example embodiments, each of the average sizes of the regions in which the internal electrodes 121 and 122 are spaced apart from the fifth and sixth surfaces, in the third direction, may be 15 um or less.

On the other hand, when applying a magnetic material instead of a dielectric material to the body 110, the multilayer electronic component may function as an inductor. The magnetic material may be, for example, ferrite and/or metallic magnetic particles. When the multilayer electronic component functions as an inductor, the internal electrode may be a coiled conductor.

Additionally, when applying a piezoelectric material instead of a dielectric material to the body 110, the multilayer electronic component may function as a piezoelectric element. A piezoelectric material may be, for example, PZT (lead zirconate titanate).

Additionally, when applying a ZnO-based or SiC-based material to the body 110 instead of a dielectric material, the multilayer electronic component may function as a variable resistor, and when applying a spinel-based material to the body 110 instead of a dielectric material, the multilayer electronic component may function as a thermistor.

That is, the multilayer electronic component 100 according to some example embodiments of the present disclosure may function not only as a multilayer ceramic capacitor, but also as an inductor, piezoelectric element, varistor, or thermistor, by appropriately changing a material or a structure of the body 110.

The internal electrodes 121 and 122 may be disposed alternately with the dielectric layer 111, and for example, the first internal electrode 121 and the second internal electrode 122, which are a pair of electrodes having different polarities, may be disposed to face each other with the dielectric layer 111 interposed therebetween. The first internal electrode 121 and the second internal electrode 122 may be electrically separated from each other by the dielectric layer 111 disposed therebetween. In this case, the internal electrodes 121 and 122 may be alternately disposed with the dielectric layer 111 in the first direction.

The first internal electrode 121 may be spaced apart from the fourth surface 4, but may extend toward the third surface 3. The second internal electrode 122 may be spaced apart from the third surface 3, but may extend toward the fourth surface 4. The first internal electrode 121 may be electrically connected to the first external electrode 131 on the third surface 3, and the second internal electrode 122 may be electrically connected to the second external electrode 132 on the fourth surface 4.

The conductive metal included in the internal electrodes 121 and 122 may be one or more selected from the group consisting of Ni, Cu, Pd, Ag, Au, Pt, Sn, W, Ti, and alloys thereof, and may include, Ni, but the present disclosure is not limited thereto.

A method of forming the internal electrodes 121 and 122 is not particularly limited. For example, the internal electrodes 121 and 122 may be formed by applying a conductive paste for internal electrodes including a conductive metal on a ceramic green sheet and sintering the conductive paste. The conductive paste for internal electrodes may be applied using screen printing or gravure printing, but the present disclosure is not limited thereto.

An average thickness te of the internal electrodes 121 and 122 in the first direction is not particularly limited, but may be, for example, 0.01 um to 3 um or less. Additionally, the average thickness te of the internal electrodes 121 and 122 may be arbitrarily set depending on desired characteristics or purposes, and for example, in the case of small IT electronic components, the average thickness te of at least one of the plurality of internal electrodes 121 and 122 may be 0.4 um or less to achieve miniaturization and high capacitance.

Here, the average thickness te of the internal electrode may be measured by scanning first and second directional cross-sections of the body 110 with a scanning electron microscope (SEM) of 10,000X magnification. More specifically, an average value may be measured by measuring the thickness at multiple areas of one internal electrode 121 or 122, for example, at 30 areas which are spaced apart from each other at equal intervals in the second direction. The 30 areas with the equal intervals may be designated in the capacitance formation portion Ac. Additionally, when the average value is measured by extending the average value measurement up to 10 internal electrodes 121 and 122, an average thickness of the internal electrodes 121 and 122 may be further generalized.

The external electrodes 131 and 132 may be disposed on the body 110 and connected to the internal electrodes 121 and 122, respectively.

As illustrated in FIG. 2, first and second external electrodes 131 and 132 disposed on the third and fourth surfaces 3 and 4 of the body 110, respectively, and connected to the first and second internal electrodes 121 and 122 through the interface plating layers 141 and 142, respectively, may be included.

In some example embodiments, a structure in which the multilayer electronic component 100 has two external electrodes 131 and 132 is described, but the number or shape of the external electrodes 131 and 132 may be changed depending on the shape of the internal electrodes 121 and 122 or other purposes.

FIG. 6 is an enlarged view illustrating region K1 of FIG 2.

The region K1 is illustrated by enlarging a portion of an area in which the first external electrode 131 is disposed, but the first external electrode 131 and the second external electrode 132 may be different only in that the first external electrode 131 is disposed on the third surface and the second external electrode 132 is disposed on the fourth surface, and the constitutions of the first external electrode 131 and the second external electrode 132 may be similar to each other, and thus, hereinafter, the description will be provided based on the first external electrode 131, but this may be considered to include the description of the second external electrode 132. Additionally, the interface electrode layers 141 and 142 are also described based on the first interface electrode layer 141, but this may be considered to include the description of the second interface electrode layer 142.

The interface plating layers 141 and 142 may be disposed in ends of the internal electrodes 121 and 122 and may serve to improve electrical connectivity between the internal electrodes 121 and 122 and the external electrodes 131 and 132. Additionally, the interface plating layers 141 and 142 may prevent metal components of the external electrodes 131 and 132 from diffusing into the internal electrodes 121 and 122, and may thus serve to suppress radiation cracks caused by volume expansion of the internal electrode. The interface plating layers 141 and 142 may include a first interface plating layer 141 disposed in the end of the first internal electrode 121 and a second interface plating layer 142 disposed in the end of the second internal electrode 122.

In some example embodiments, the body 110 may include groove portions G1 and G2 in which the ends of the internal electrodes 121 and 122 are spaced apart from one surface of the body 110, and the interface plating layers 141 and 142 may include a first region disposed in the groove portions G1 and G2 and a second region protruding onto one surface of the body.

The groove portions G1 and G2 may be formed by differences in a contraction behavior between the internal electrodes 121 and 122 and the dielectric layer 111 in the sintering process of the body 110. When a sintering contraction rate of the internal electrodes 121 and 122 is greater than that of the dielectric layer 111, a problem may occur in which the connectivity between the internal electrodes 121 and 122 and the external electrodes 131 and 132 is reduced due to the groove portions G1 and G2. Conventionally, in order to solve such a problem, an attempt has been made to solve this problem by adding a process to remove a protruding dielectric layer using a sandblasting method. On the other hand, according to some example embodiments of the present disclosure, since the interface plating layers 141 and 142 include a first region disposed in the groove portions G1 and G2 and a second region protruding onto one surface of the body, connectivity between the internal electrodes 121 and 122 and the external electrodes 131 and 132 may be improved without a separate polishing process.

In some example embodiments, the second region of the groove in the first and second directional cross-section of the multilayer electronic component 100 may have a semicircular shape. Accordingly, electrical connectivity may be further improved by maximizing a contact area with conductive resin layers 131a and 132a.

In some example embodiments, when an average thickness of the internal electrode is referred to as te, an average thickness of the dielectric layer is referred to as td, and a radius of the semicircular shape is referred to as r, te/2 ≤ r ≤ (te+td)/2 may be satisfied. When the radius r of the semicircular shape is less than te/2, an effect of improving connectivity between the external electrode and the internal electrode may be insufficient, and when the radius r of the semicircular shape exceeds (te+td)/2, the interface plating layers 141 and 142 may be connected to each other to form a single layer, which may weaken bonding force between the external electrode and the body.

In some example embodiments, the radius r of the semicircular shape may be 4 um or less. When the radius r of the semicircular shape exceeds 4 µm, adjacent interface plating layers 141 and 142 may be connected to each other to form a single layer, which may weaken the bonding force between the external electrode and the body.

The radius r of the semicircular shape may be measured by scanning first and second directional cross-sections of the body 110 with a scanning electron microscope (SEM) of 10,000X magnification. Additionally, the radius r of the semicircular shape may be measured at any five interface electrode layers 141 and 142, and an average value thereof may be used as the radius r of the semicircular shape.

In some example embodiments, the internal electrodes 121 and 122 may be provided in plural form, and an interface plating layer 141 or 142 disposed in one end of the plurality of internal electrodes 121 and 122 may be spaced apart from an interface plating layer 141 or 142 disposed on an end of another internal electrode. Accordingly, the conductive resin layers 131a and 132a may be in contact with at least a portion of the end of the dielectric layer 111, thereby improving the bonding force between the external electrodes 131 and 132 and the body 110.

In some example embodiments, the interface plating layers 141 and 142 may have an amorphous structure. A crystalline structure refers to a structure that may express a lattice structure using symmetry elements such as translation, rotation, reflection, and inversion, in terms of long-range periodicity in a three-dimensional lattice structure. On the other hand, the amorphous structure does not have long-range periodicity but refers to a have a repetitive structure in a short-range order by connecting atomic structures as a basic unit to each other.

As the interface plating layers 141 and 142 have the amorphous structure, it may be possible to more effectively suppress the metal components of the external electrodes 131 and 132 from diffusing into the internal electrodes 121 and 122.

In an example embodiment, the interface plating layers 141 and 142 may include Ni and P. Accordingly, the interface plating layers 141 and 142 may be easily controlled to have the amorphous structure, and may easily prevent the metals of the external electrode from diffusing into the internal electrodes.

In this case, a mass ratio of a P content to a Ni content (a P content/a Ni content) included in the interface plating layers 141 and 142 may be 8% or more and 15% or less. When the mass ratio of the P content to the Ni content included in the interface plating layers 141 and 142 is more than 15%, there may be a risk that the equivalent series resistance (ESR) between the internal electrode and the external electrode may increase, and when the mass ratio thereof is less than 8%, as a thermal expansion coefficient of the interface plating layers 141 and 142 increases, a difference in the thermal expansion coefficient from the body may increase at high temperatures, which may weaken the bonding strength between the interface plating layer and the body.

In some example embodiments, the interface plating layers 141 and 142 may include Ni and B. Accordingly, the interface plating layers 141 and 142 may be easily controlled to have the amorphous structure, and may easily prevent the metals from the external electrode from diffusing into the internal electrode.

In this case, a mass ratio of a B content to a Ni content (a B content/a Ni content) contained in the interface plating layers 141 and 142 may be 2.5% or more and 10% or less. Accordingly, the charge transfer resistance of the interface plating layers 141 and 142 may be increased to improve corrosion resistance against exposure to external moisture, moisture penetration, and the like.

Meanwhile, an analysis of elements included in the interface plating layers 141 and 142 may be performed by measuring first and second directional cross-sections passing through a third directional center of the body 110, using scanning electron microscopy (SEM) and dispersive spectrometry (EDS). After measuring the content of each element in a central portion of five or more interface plating layers 141 and 142 using EDS to obtain an average value of each element, the average value may be used to obtain the mass ratio of the P content to the Ni content or the mass ratio of the B content to the Ni content.

The external electrodes 131 and 132 may be disposed to contact at least a portion of the end of the dielectric layer 111 disposed between the internal electrodes and to cover the interface plating layers 141 and 142, and may include conductive resin layers 131a and 132a including a conductive metal and a resin. Here, the end of the dielectric layer 111 may form the third surface or the fourth surface of the body 110.

The conductive metal included in the conductive resin layers 131a and 132a does not need to be particularly limited, and may include, for example, at least one selected from the group consisting of Cu, Ni, Sn, Pd, Pt, Au, Ag, Pb and alloys including the same, and the conductive metal may include, one or more selected from the group consisting of Cu, Ag, Sn and alloys thereof.

The conductive resin layers 131a and 132a may serve to electrically connect the plating layers 131b and 132b and the internal electrodes 121 and 122, and may prevent cracks from occurring by absorbing tensile stress generated in mechanical or thermal environments when mounting electronic components on a substrate and may serve to protect the multilayer ceramic capacitor from warpage impacts of the substrate.

Referring to FIG. 6, the conductive resin layer 131a may include conductive metals 131a-1 and 131a-3 and a resin 131a-2, and the conductive metal included in the conductive resin layer 131a may include a plurality of metal particles 131a-1 and a first intermetallic compound 131a-3 connecting at least a portion of the plurality of metal particles.

The metal particles 131a-1 may include one or more of Ag or Cu, and may include, more preferably, Ag.

The first intermetallic compound 131a-3 may serve to improve electrical connectivity by connecting at least a portion of a plurality of metal particles. Additionally, the first intermetallic compound 131a-3 may be disposed to surround at least a portion of the plurality of metal particles 132a. Additionally, the first intermetallic compound 131a-3 may minimize stress inside the body 110 and improve high temperature load and moisture resistance characteristics.

The first intermetallic compound 131a-3 may include an intermetallic compound between a low melting point metal and metal particles. The low melting point metal included in a conductive resin layer paste may be partially melted during a drying and hardening heat treatment process, and may form a first intermetallic compound 131a-3 with some of the metal particles. In this case, the low melting point metal may have a melting point of 300°C or lower.

For a more specific example, the low melting point metal may be one or more selected from the group consisting of Sn, Sn_{96.5}Ag_{3.0}Cu_{0.5}, Sn₄₂Bi₅₈ and Sn₇₂Bi₂₈. After applying the conductive resin layer paste on the body, Sn is melted in the drying and hardening process, and the molten Sn wets high-melting point metal particles such as Ag or Cu through capillary action and reacts with a portion of the Ag or Cu metal particles to form a first intermetallic compound 131a-3 such as Ag₃Sn, Cu₆Sn₅, Cu₃Sn, and the like. Ag or Cu that did not participate in the reaction remains in the form of metal particles 131a-1, as illustrated in FIG. 6. Additionally, even if the drying and curing process is completed, some Sn does not participate in the reaction, and may react with the plating layers 131b and 132b during a subsequent plating heat treatment to form an intermetallic compound. Additionally, even after the plating heat treatment, some low melting point metals may remain by being included in the first intermetallic compound.

Additionally, the low melting point metals may react with the interface plating layers 141a and 142a to form a second intermetallic compound in an interface between the interface plating layers 141a and 142a and the conductive resin layers 131a and 132a. In this case, the second intermetallic compound may include Ni and Sn.

A resin 132c may include a thermosetting resin having electrical insulation properties.

According to some embodiments, the thermosetting resin may include, for example, an epoxy resin, but the present disclosure is not limited thereto, and may include, for example, bisphenol A resin, glycol epoxy resin, novolac epoxy resin, or a resin that is liquid at room temperature due to a low molecular weight, derivatives thereof.

The external electrodes 131 and 132 may include plating layers 131b and 132b disposed on the conductive resin layers 131a and 132a.

The plating layers 131b and 132b serve to improve mounting characteristics. The types of plating layers 131b and 132b are not particularly limited, and the plating layers 131b and 132b may be plating layers including one or more of Ni, Sn, Pd, and alloys thereof, and may be formed of multiple layers.

For more specific examples of the plating layers 131b and 132b, the plating layers 131b and 132b may include Ni plating layers or Sn plating layers, and may be in the form in which the Ni plating layer and the Sn plating layer are sequentially formed on the electrode layers 131a and 132a, or may be in the form in which the Sn plating layer, the Ni plating layer and the Sn plating layer are sequentially formed. Additionally, the plating layers 131b and 132b may include a plurality of Ni plating layers and/or a plurality of Sn plating layers.

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a body including a dielectric layer and internal electrodes alternately disposed with the dielectric layer;
an interface plating layer disposed on an end of at least one of the internal electrodes; and
an external electrode disposed to contact at least a portion of an end of the dielectric layer and to cover the interface plating layer,
wherein the external electrode includes a conductive resin layer including a conductive metal and a resin.

2. The multilayer electronic component according to claim 1, wherein the body includes a groove portion in which the end of the internal electrode is spaced apart from one surface of the body, and
the interface plating layer includes a first region disposed in the groove portion and a second region protruding from one surface of the body.

3. The multilayer electronic component according to claim 2, wherein the internal electrodes are alternately disposed with the dielectric layer in a first direction, and the body includes first and second surfaces opposing each other in the first direction, third and fourth surfaces connected to the first and second surfaces and opposing each other in a second direction, and fifth and sixth surfaces connected to the first to fourth surfaces and opposing each other in a third direction
in first and second directional cross-sections of the multilayer electronic component, the second region of the interface plating layer has a semicircular shape.

4. The multilayer electronic component according to claim 3, wherein, when an average thickness of the internal electrode is te, an average thickness of the dielectric layer is td, and a radius of the semicircular shape is referred to as r, te/2 ≤ r ≤ (te+td)/2 is satisfied.

5. The multilayer electronic component according to claim 3, wherein, when a radius of the semicircular shape is 4 µm or less.

6. The multilayer electronic component according to claim 1, wherein the body includes a plurality of the interface plating layers,
each of the plurality of the interface plating layer is spaced apart from each other.

7. The multilayer electronic component according to claim 1, wherein the interface plating layer has an amorphous structure.

8. The multilayer electronic component according to claim 1, wherein the interface plating layer includes Ni and P.

9. The multilayer electronic component according to claim 8, wherein a mass ratio of a P content to a Ni content included in the interface plating layer is 8% or more and 15% or less.

10. The multilayer electronic component according to claim 1, wherein the interface plating layer includes Ni and B.

11. The multilayer electronic component according to claim 10, wherein a mass ratio of a B content to a Ni content included in the interface plating layer is 2.5% or more and 10% or less.

12. The multilayer electronic component according to claim 1, wherein the conductive metal included in the conductive resin layer includes one or more of Cu, Ag, Sn, and alloys thereof.

13. The multilayer electronic component according to claim 1, wherein the conductive metal included in the conductive resin layer includes a plurality of metal particles and a first intermetallic compound connecting at least a portion of the plurality of metal particles.

14. The multilayer electronic component according to claim 13, wherein the plurality of the metal particles include Ag and/or Cu, and
the first intermetallic compound includes one or more of Ag₃Sn, Cu₆Sn₅, and Cu₃Sn.

15. The multilayer electronic component according to claim 1, wherein a second intermetallic compound is disposed in an interface between the interface plating layer and the external electrode, and the second intermetallic compound includes Ni and Sn.
